# EUROPEAN PATENT APPLICATION

(11) **EP 2 325 994 A2**
(43) Date of publication of application: **25.05.2011**
(21) Application number: 10189050.7
(22) Date of filing: 27.10.2010
(51) Int. Cl.: H02M 7/487

(54) **Power conversion equipment**

(30) Priority: 17.11.2009 JP 2009261501
(71) Applicant: FUJI ELECTRIC HOLDINGS CO., LTD., Kawasaki-shi, Kanagawa 210-0856 (JP)
(72) Inventor: Tabata, Masafumi, Tokyo 141-0032 (JP); Fujita, Kouetsu, Kanagawa 210-0856 (JP)
(74) Representative: MERH-IP Matias Erny Reichl Hoffmann

(57) **Abstract**

In a multilevel conversion equipment, although a capacitor series circuit is used in a direct current portion, parts such as semiconductor switches and a reactor are added to the exterior in order to balance the voltages, but this leads to an increase in size, and an increase in cost, of an equipment.

A power conversion equipment, a capacitor series circuit Cp, Cn being connected in parallel with a direct current power supply Ed, outputs an alternating current voltage having three or more potentials in a half-cycle period with the capacitor series circuit as a direct current input, wherein a neutral point of an alternating current load M and an intermediate connection point of the capacitor series circuit are directly connected, the voltage of each of the capacitors Cp, Cn is detected, and a zero voltage vector obtained by making each alternating current output of the same potential is adjusted in accordance with the difference between the voltages.

## Description

### BACKGROUND OF THE INVENTION

### 1. Technical Field

The present invention relates to a multilevel inverter that outputs an alternating current voltage having three or more different potentials in a half-cycle period, and in particular, relates to a technology for balancing the voltage of each capacitor in a capacitor series circuit installed in a direct current input.

### 2. Related Art

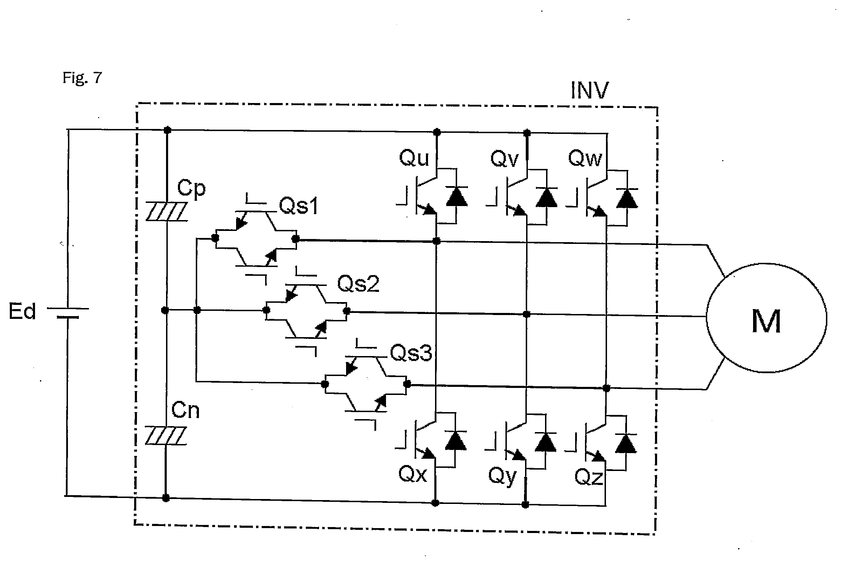

Fig. 7 shows a circuit of a power conversion equipment (a three-level inverter) that outputs an alternating current voltage having three or more different potentials in a half-cycle period using IGBTs as semiconductor switching elements. Although there are also configurations having more than three levels, such as five levels, as a multilevel inverter, a description will be given here with a three-level inverter as an example. A direct current circuit portion of the three-level inverter has a configuration wherein it has a series circuit of capacitors Cp and Cn on a positive electrode side and negative electrode side as a direct current input, and a direct current power supply Ed is connected in parallel to the series circuit. Also, an inverter INV has a configuration wherein each of bidirectional switches, wherein reverse blocking IGBTs are inverse parallel connected, is connected between alternating current terminals of a bridge circuit configured of six IGBTs (Qu, Qv, Qw, Qx, Qy, and Qz) and an internal connection point of the capacitor series circuit.

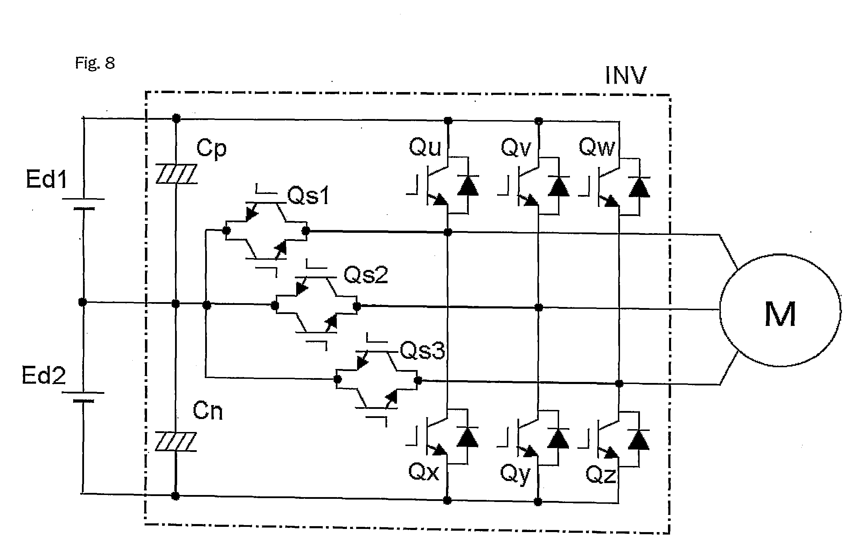

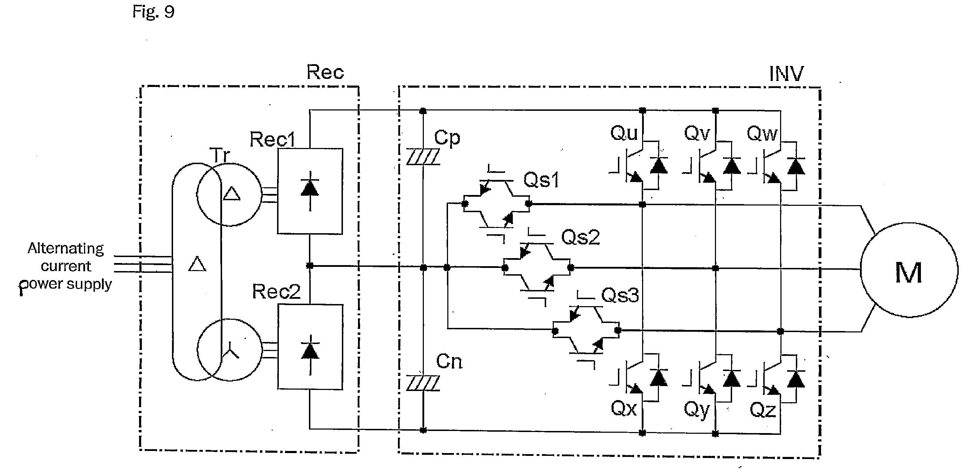

In the circuit configuration shown in Fig. 8, a configuration is such that two direct current power supplies Ed1 and Ed2 are used in the direct current input portion, and connected in parallel to the series connected capacitors, and the inverter portion is the same as that in Fig. 7. In the case of this configuration, two direct current power supplies are necessary.
The circuit configuration shown in Fig. 9 is an example of a heretofore known rectifying power supply wherein the two direct current power supplies Ed1 and Ed2 in the circuit of Fig. 8 are configured by a secondary two-winding transformer Tr1 and diode rectifier circuits Rec1 and Rec2. By means of this configuration, it is possible to improve an alternating current power supply primary side power factor, while generating two direct current power supplies. However, in the event that the voltages of the positive electrode side and negative electrode side capacitors of the three-level inverter become unbalanced, the power factor worsens.

As heretofore described, various configurations are being employed for the direct current power supply portion of a three-level inverter that outputs an alternating current voltage having three potentials, in order to balance the voltages of the positive electrode side capacitor and negative electrode side capacitor. However, due to variations in IGBT operation and control, part variation, and the like, it is difficult to avert voltage unbalance with only the heretofore described circuit configurations.

In order to solve this problem, the circuit configuration shown in Fig. 10 and described in Japanese Patent No. 3, 249, 380 is known. The example of Fig. 10 is a voltage balancing chopper CH wherein a series circuit of semiconductor switching elements Qpch and Qnch is connected in parallel with the series circuit of the positive electrode side and negative electrode side capacitors, and a reactor Lch is connected between an internal connection point of the semiconductor switching elements Qpch and Qnch and an internal connection point of the capacitor series circuit. When a difference occurs between the voltage values of the positive electrode side and negative electrode side capacitors Cp and Cn, the semiconductor switching elements Qpch and Qnch are optionally turned on and off, thus adjusting the voltages.
Also, according to Japanese Patent No. 4,279,640, bidirectional switches are connected between a neutral point of a load and the internal connection point of the capacitor series circuit of the direct current input, and the bidirectional switches are optionally turned on and off in accordance with the difference between the capacitor voltages, thus adjusting a voltage unbalance.

As heretofore described, according to both Japanese Patent No. 3,249,380 and Japanese Patent No. 4,279,640, separate semiconductor switching elements and a reactor are necessary in order to adjust an unbalance in the direct current voltages, and there is a problem in that this leads to an increase in size, and an increase in cost, of an equipment.

### SUMMARY OF THE INVENTION

In order to solve the heretofore described problem, according to a first aspect of the invention, a power conversion equipment, a capacitor series circuit in which a plurality of capacitors are connected in series being connected in parallel with a direct current power supply, outputs an alternating current voltage having three or more potentials in a half-cycle with the capacitor series circuit as a direct current input, wherein a neutral point of a star-connected alternating current load and an intermediate connection point of the capacitor series circuit are directly connected.

According to a second aspect of the invention, the power conversion equipment according to the first aspect of the invention is preferably characterized in that the voltage of each of the capacitors is preferably detected, and/or a zero voltage vector obtained by making each alternating current output of the same potential is adjusted in accordance with the difference between the voltages.

According to a third aspect of the invention, when the difference between the detected voltage of each of the capacitors is smaller than a predetermined value, the voltage of each of the capacitors is preferably adjusted by controlling to a mode in which each alternating current output is of a neutral point potential.

According to the invention, in a power conversion equipment that can output an alternating current voltage having three or more different potentials in a half-cycle, it is possible to achieve the elimination of an unbalance in the voltages of positive electrode side and negative electrode side capacitors without adding separate parts, and a downsizing and reduction in cost of an equipment are possible.

### BRIEF DESCRIPTION OF THE DRAWINGS

Fig. 1 shows a circuit configuration showing a first embodiment of the invention;
Figs. 2A to 2C are illustrations of a first operation in the first embodiment of the invention;
Figs. 3A to 3C are illustrations of a second operation in the first embodiment of the invention;
Figs. 4A to 4C are illustrations of a third operation in the first embodiment of the invention;
Figs. 5A to 5C are illustrations of an operation in a second embodiment of the invention;
Fig. 6 is a circuit diagram showing a third embodiment of the invention;
Fig. 7 is a circuit configuration diagram showing a first heretofore known example;
Fig. 8 is a circuit configuration diagram showing a second heretofore known example;
Fig. 9 is a circuit configuration diagram showing a specific example of the second heretofore known example; and

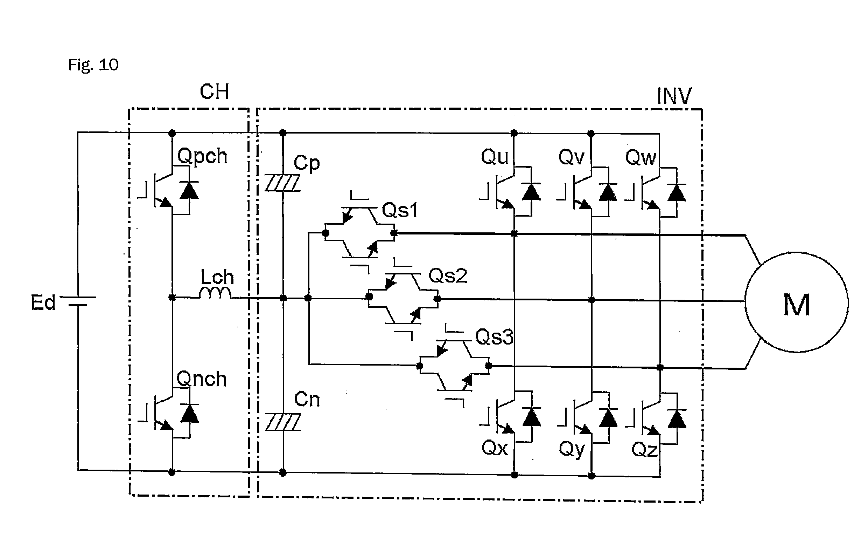

Fig. 10 is a circuit configuration diagram showing a third heretofore known example;

### DETAILED DESCRIPTION OF THE EMBODIMENTS

The essence of the invention lies in the point that in a power conversion equipment that, a capacitor series circuit in which a plurality of capacitors are connected in series being connected in parallel with a direct current power supply, outputs an alternating current voltage having three or more potentials in a half-cycle period with the capacitor series circuit as a direct current input, a neutral point of a star-connected alternating current load and an intermediate connection point of the capacitor series circuit are directly connected, the voltage of each of the capacitors is detected, and a zero voltage vector obtained by making each alternating current output of the same potential is adjusted in accordance with the difference between the voltages.

### First Embodiment

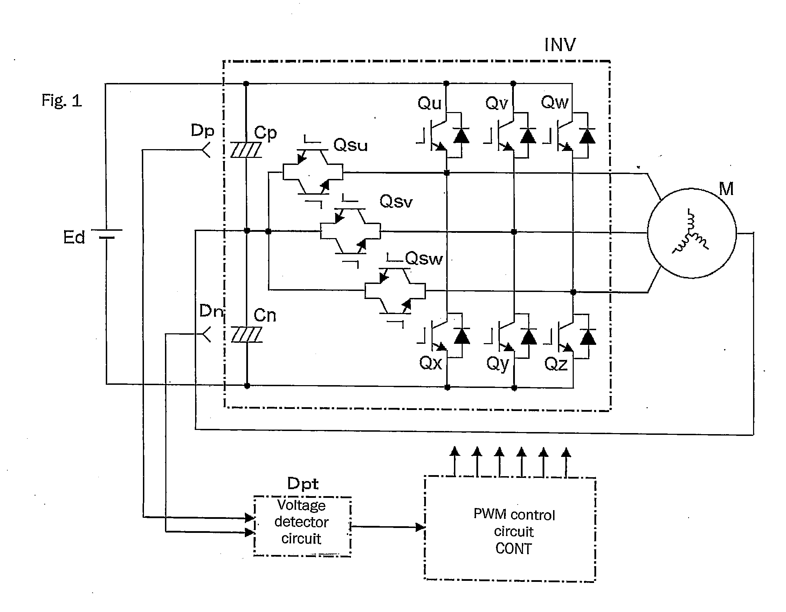

Fig. 1 shows a first embodiment of the invention. It is a power conversion equipment (a three-level inverter) that can output an alternating current voltage having three or more different potentials in a half-cycle period using IGBTs as semiconductor switching elements. A direct current circuit portion of the three-level inverter has a configuration wherein it has a series circuit of capacitors Cp and Cn between a positive electrode and a negative electrode as a direct current input, and a direct current power supply Ed is connected in parallel to the series circuit.

Also, an inverter INV has a configuration wherein each of bidirectional switches Qsu, Qsv, and Qsw, wherein reverse blocking type IGBTs are inverse parallel connected, is connected between alternating current terminals of a bridge circuit configured of six IGBTs (Qu, Qv, Qw, Qx, Qy, and Qz) and an internal connection point of the capacitor series circuit. Also, a connection point of the capacitor series circuit of the capacitors Cp and Cn between the positive electrode and negative electrode, and a neutral point of a star-connected alternating current load M, are directly connected. Furthermore, voltage detectors Dp and Dn for detecting voltage are provided in the positive electrode side and negative electrode side capacitors Cp and Cn respectively, their outputs are level converted in a voltage detector circuit Dpt, the detected values thereof are sent to a PWM control circuit CONT, and on-off signals for the six IGBTs and three bidirectional switches are generated in the PWM control circuit CONT.

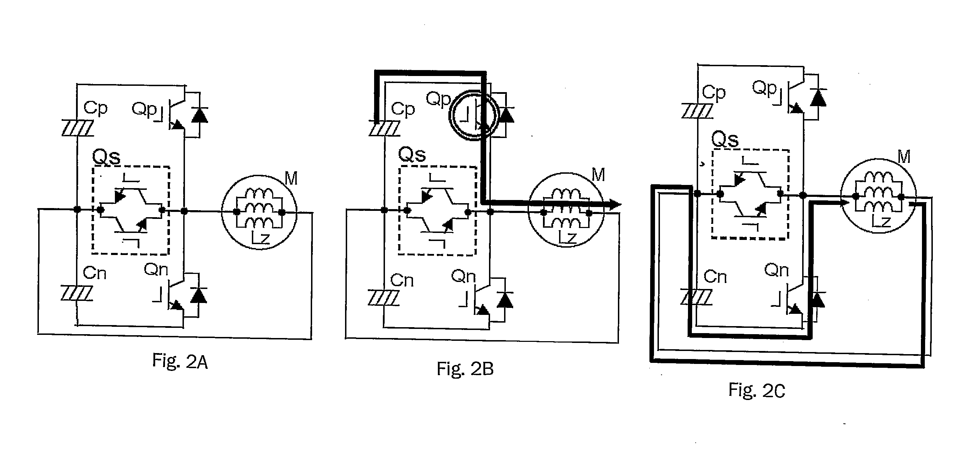

A control operation in the PWM control circuit CONT is shown in Figs. 2A to 2C. Fig. 2A shows an equivalent circuit focused on a zero phase sequence component in the circuit configuration of Fig. 1. A zero voltage is an alternating current output voltage when the IGBTs Qu, Qv, and Qw of the circuit of Fig. 1 are turned on simultaneously, or the IGBTs Qx, Qy, and Qz are turned on simultaneously, and it is possible, as shown in Fig. 2A, to replace with an equivalent circuit wherein the simultaneous turning on of the IGBTs Qu, Qv, and Qw is aggregated in an IGBT Qp, and the simultaneous turning on of the IGBTs Qx, Qy, and Qz in an IGBT Qn. Also, the alternating current load M can be represented as an inductor Lz. Furthermore, the neutral point of the alternating current load M is connected to a connection point of direct current intermediate capacitors Cp and Cn, as previously described.

Next, an operating example is shown in Figs. 2B and 2C. It is an operation when a charge of the capacitor Cp is moved to the capacitor Cn. Firstly, in Fig. 2B, on the IGBT Qp being turned on, the current flows along a path from the positive electrode side capacitor Cp, through the IGBT Qp, to the inductor Lz of the alternating current load M, and energy is accumulated in the inductor Lz of the alternating current load M. Next, on the IGBT Qp being turned off, the energy accumulated in the inductor Lz of the alternating current load M charges the negative electrode side capacitor Cn via a diode inverse parallel connected to the IGBT Qn, as shown in Fig. 2C. When the voltage of the capacitor Cp is high, it is possible, by means of this kind of operation, to move the charge of the capacitor Cp to the capacitor Cn.

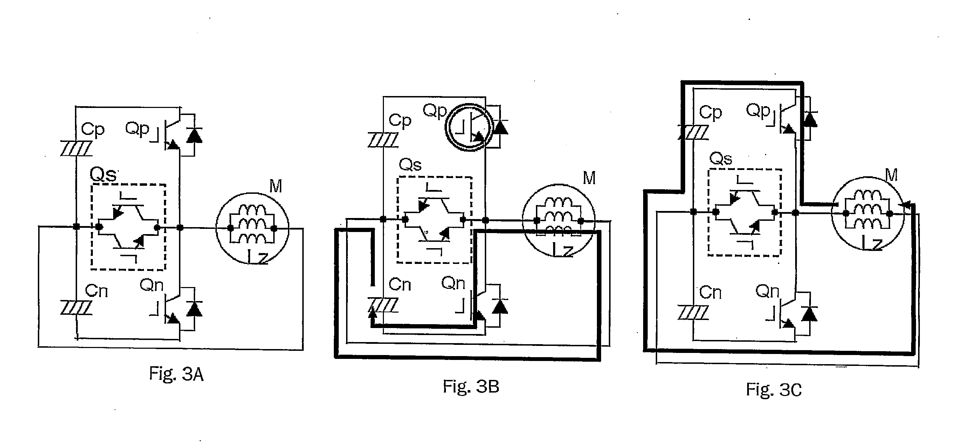

Figs. 3B and 3C show an operation when a charge of the capacitor Cn is moved to the capacitor Cp. As shown in Fig. 3B, on the IGBT Qn being turned on, the current flows along a path from the negative electrode side capacitor Cn, through the inductor Lz of the alternating current load M, to the IGBT Qn, and energy is accumulated in the inductor Lz of the alternating current load M. Next, on the IGBT Qn being turned off, the energy accumulated in the inductor Lz of the alternating current load M charges the positive electrode side capacitor Cp via a diode inverse parallel connected to the IGBT Qp, as shown in Fig. 3C. When the voltage of the capacitor Cn is high, it is possible, by means of this kind of operation, to move the charge of the capacitor Cn to the capacitor Cp. By means of the heretofore described kinds of operation, it is possible to move the charge of the positive electrode side capacitor Cp to the negative electrode side capacitor Cn, or the charge of the negative electrode side capacitor Cn to the positive electrode side capacitor Cp.

That is, by detecting the voltages of the positive electrode side and negative electrode side capacitors Cp and Cn, and causing the operation of Figs. 2B and 2C or Figs. 3B and 3C to be carried out in accordance with the voltage difference between their respective voltage values Vcp and Vcn, it is possible to equalize the voltages of the capacitors Cp and Cn. For example, by causing the operation of Figs. 2B and 2C to be carried out when the voltage Vcp of the capacitor Cp is greater than the voltage Vcn of the capacitor Cn, and the operation of Figs. 3B and 3C when the voltage Vcp of the capacitor Cp is smaller than the voltage Vcn of the capacitor Cn, it is possible to equalize the voltage values of the positive electrode side capacitor and negative electrode side capacitor, and it is possible to supply a stable power to the alternating current load M.

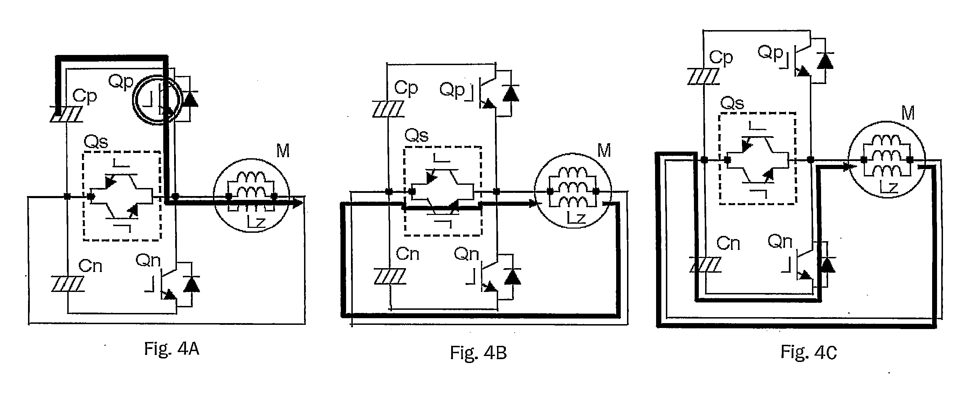

Figs. 4A to 4C are diagrams illustrating the previously described operations based on a basic operational pattern of the three-level inverter. Fig. 4A shows the mode wherein the IGBT Qp is turned on, and energy is supplied from the positive electrode side capacitor Cp to the inductor Lz of the alternating current load M. Next, on the IGBT Qp being turned off, and a bidirectional switch Qs turned on, the energy accumulated in the inductor Lz of the alternating current load M flows back along a path passing through the alternating current switch Qs, as shown in Fig. 4B. Next, on the bidirectional switch Qs being turned off, the energy accumulated in the inductor Lz of the alternating current load M is accumulated in the negative electrode side capacitor Cn via the inverse parallel connected diode of the IGBT Qn, as shown in Fig. 4C. Also, as a transfer of a charge from the negative electrode side capacitor Cn to the positive electrode side capacitor Cp is also an inversely symmetrical operation, the same kind of operation is possible.

When the voltage difference between the positive electrode side capacitor and negative electrode side capacitor is smaller than a predetermined value, even when causing a current backflow, and causing consumption by utilizing resistance of the alternating current load M or bidirectional switch Qs, in the mode shown in Fig. 4B, it is possible to balance the capacitor voltages. Consequently, the predetermined value refers to a capacitor voltage based on power which can be consumed by the resistance of the alternating current load M or bidirectional switch Qs.

### Second Embodiment

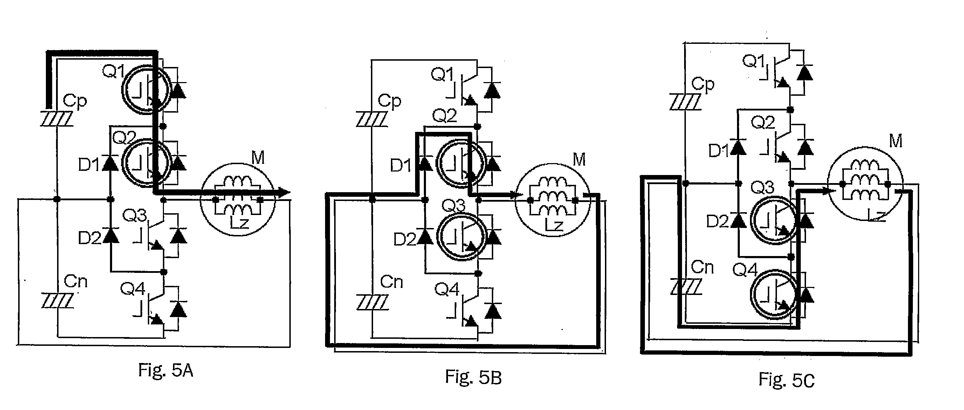

Figs. 5A to 5C show a second embodiment of the invention. Figs. 5A to 5C show a circuit configuration in a common neutral point clamping type three-level inverter using a clamping diode. Hereafter, operations will be described.
Fig. 5A showing a mode wherein IGBTs Q1 and Q2 are turned on, and the alternating current load M is supplied from the positive side electrode capacitor Cp, energy is accumulated in the inductor Lz. Next, on the IGBT Q1 being turned off, and an IGBT Q3 turned on, the energy accumulated in the inductor Lz flows back via the IGBT Q2, as shown in Fig. 5B. Next, on the IGBT Q2 being turned off, and an IGBT Q4 turned on, the energy accumulated in the alternating current load is accumulated in the negative electrode side capacitor Cn via a diode inverse parallel connected to the IGBTs Q3 and Q4. Also, as a transfer of energy from the negative electrode side capacitor Cn to the positive electrode side capacitor Cp is also an inversely symmetrical operation, the same kind of operation is possible.

When the voltage difference between the positive electrode side capacitor and negative electrode side capacitor is smaller than a predetermined value, even when causing a current backflow, and causing consumption by utilizing resistance of the alternating current load M, diodes D1 and D2, and IGBTs Q2 and Q3, in the mode shown in Fig. 5B, it is possible to balance the capacitor voltages. Consequently, the predetermined value refers to a voltage based on power which can be consumed by the resistance of the alternating current load M, diodes D1 and D2, or IGBTs Q2 and Q3.

### Third Embodiment

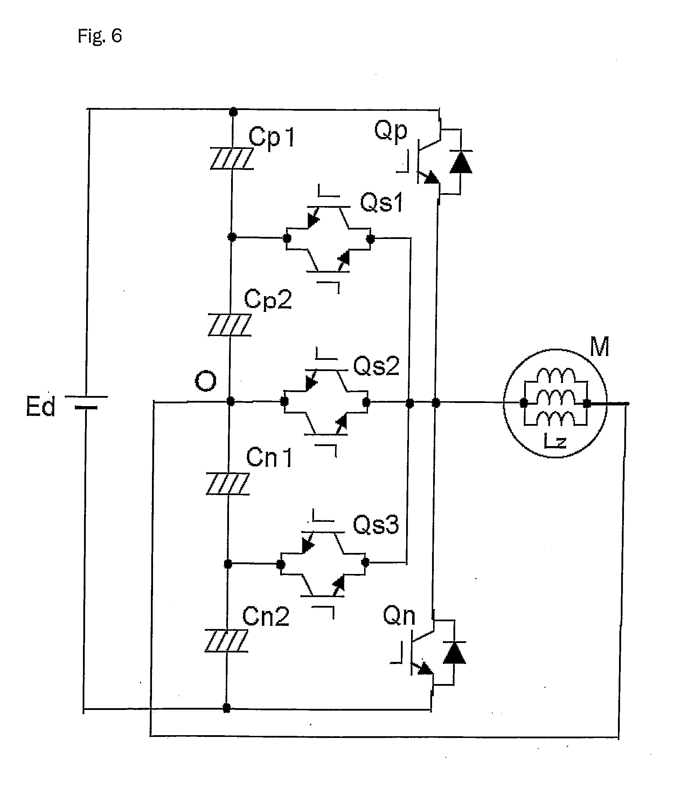

Fig. 6 shows a third embodiment of the invention. It is an equivalent circuit focused on a zero phase sequence component showing an embodiment in a five-level inverter. A five-level inverter is a power conversion circuit that outputs an alternating current voltage having five potentials in a half-cycle period. A configuration is such that the two capacitors Cp and Cn of the direct current input of the inverter INV of the first embodiment shown in Fig. 1 are changed to four capacitors Cp1, Cp2, Cn1, and Cn2, and bidirectional switches are connected between connection points of the capacitors and alternating current outputs of the inverter. A neutral point of a load and an intermediate connection point of the series capacitor are connected.
Operations in this kind of configuration are the same as those in the first embodiment.

In a mode in which the IGBT Qp is turned on and off, on the IGBT Qp being turned on, the series circuit of the capacitors Cp1 and Cp2 is a power supply, a current flows along a path from the IGBT Qp, through the load M, to an intermediate connection point O of the four capacitors, and energy is accumulated in the inductor Lz of the load. Next, on the IGBT Qp being turned off, the energy of the load enters a free wheeling mode on a bidirectional switch Qs2 being turned on, a mode charging the capacitor Cn1 on a bidirectional switch Qs3 being turned on, and a mode charging the capacitors Cn1 and Cn2 on the bidirectional switches Qs2 and Qs3 being left turned off.

In a mode in which a bidirectional switch Qs1 is turned on and off, on the bidirectional switch Qs1 being turned on, the capacitor Cp2 is a power supply, and energy is accumulated in the inductor Lz of the load. Next, on the bidirectional switch Qs1 being turned off, the energy of the load enters a free wheeling mode on the bidirectional switch Qs2 being turned on, a mode charging the capacitor Cn1 on a bidirectional switch Qs3 being turned on, and a mode charging the capacitors Cn1 and Cn2 on the bidirectional switches Qs2 and Qs3 being left turned off.
Also, as a transfer of energy from the negative electrode side capacitors Cn1 and Cn2 to the positive electrode side capacitors Cp1 and Cp2 is also an inversely symmetrical operation, the same kind of operation is possible.
Also, when the voltage difference between the capacitors is smaller than a predetermined value, it is possible to cause energy to be consumed by means of the free wheeling mode.
By means of the heretofore described kinds of operation, it is possible to move a charge from a capacitor with a higher voltage to a capacitor with a lower voltage, and it is possible to balance the capacitor voltages.
Although examples in a three-level and five-level inverter have been shown in the embodiments, the invention can be applied to a power conversion equipment that outputs an alternating current having three or more levels in a half-cycle period, regardless of a circuit configuration of the inverter.

The invention can be applied to a motor drive equipment, an uninterruptible power supply system, or the like, to which is applied a multilevel inverter using a direct current input wherein which capacitors are connected in series.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A power conversion equipment that, a capacitor series circuit in which a plurality of capacitors (Cp, Cn) are connected in series being connected in parallel with a direct current power supply (Ed), outputs an alternating current voltage having three or more potentials in a half-cycle with the capacitor series circuit as a direct current input, wherein
a neutral point of a star-connected alternating current load (M) and an intermediate connection point of the capacitor series circuit are directly connected.

2. The power conversion equipment according to claim 1, wherein
the voltage of each of the capacitors (Cp, Cn) is detected, and a zero voltage vector obtained by making each alternating current output of the same potential is adjusted in accordance with the difference between the voltages.

3. The power conversion equipment according to claim 1 or 2, wherein
when the difference between the detected voltage of each of the capacitors (Cp, Cn) is smaller than a predetermined value, the voltage of each of the capacitors (Cp, Cn) is adjusted by controlling to a mode in which each alternating current output is of a neutral point potential.
